# EUROPEAN PATENT SPECIFICATION

(11) **EP 3 226 444 B1**
(45) Date of publication and mention of the grant of the patent: **13.06.2018**
(21) Application number: 16163470.4
(22) Date of filing: 01.04.2016
(51) Int. Cl.: H04B 17/00

(54) **DEVICE AND METHOD FOR TESTING A NARROW BAND INTERNET OF THINGS COMMUNICATION**
VORRICHTUNG UND VERFAHREN ZUM TESTEN DER KOMMUNIKATION EINES SCHMALBANDIGEN INTERNETS DER DINGE
DISPOSITIF ET PROCÉDÉ POUR TESTER UNE BANDE ÉTROITE INTERNET DE COMMUNICATION DE CHOSES

(43) Date of publication of application: 04.10.2017
(73) Proprietor: Rohde & Schwarz GmbH & Co. KG, 81671 München (DE)
(72) Inventor: Harteneck, Moritz, 81739 München (DE)
(74) Representative: Körfer, Thomas

(56) References cited:
- EP-A1- 2 911 468
- US-B1- 8 041 782

## Description

The invention relates to a testing device and method, especially to a testing device and a testing method utilized for the purpose of testing an internet of things (IoT) communication, and more especially for testing a narrow band internet of things (NB-IoT) communication.

Generally, due to the emergence of smart cities and smart metering applications, there is a growing need of communication technology especially focused on an improved indoor coverage, low cost, low power consumption, and support of a massive number of device, which in turn leads to an increasing need of testing such technology. Furthermore, a well-suited technology for fulfilling the foregoing requirements is narrow band internet of things being standardized by the 3^{rd} Generation Partnership Project (3GPP) standards body.

However, currently, there are no testing devices and methods available for testing a narrow band internet of things communication.

For instance, the patent document EP 2 911 468 A1 merely discloses a device and a method for implementing an internet of things - not even a narrow band internet of things - application.

Accordingly, there is the object to provide a communication testing device and a communication testing method for testing a narrow band internet of things communication.

This object is solved by the features of claim 1 for a communication testing device and claim 8 for a communication testing method. Further, it is solved by the features of claim 15 for an associated computer program. The dependent claims contain further developments.

According to a first aspect of the invention, a communication testing device for testing a narrow band internet of things (NB-IoT) communication is provided. For testing, the communication testing device is configured to transmit test signals, wherein the test signals are solely based on common reference signals of a network cell working under the long term evolution (LTE) standard.

According to a first preferred implementation form of the first aspect, the communication testing device is configured to set the narrow band internet of things (NB-IoT) communication to in-band mode or to guard-band mode.

According to a further preferred implementation form of the first aspect, the communication testing device is configured to further base the test signals on orthogonal frequency-division multiple access channel noise generation.

According to a further preferred implementation of the first aspect, the common reference signals have a first periodicity and the orthogonal frequency-division multiple access channel noise generation has a second periodicity.

According to a further preferred implementation form of the first aspect, the first periodicity is equal to the second periodicity or the first periodicity is different from the second periodicity.

According to a further preferred implementation form of the first aspect, the first periodicity and/or the second periodicity is equal to the periodicity of a frame of the long term evolution (LTE) standard.

According to a further preferred implementation form of the first aspect, the first periodicity and/or the second periodicity is equal to 5 to 15 milliseconds, preferably 10 milliseconds.

According to a second aspect of the invention, a communication testing method for testing a narrow band internet of things (NB-IoT) communication is provided. For testing, test signals are transmitted, wherein the test signals are solely based on common reference signals of a network cell working under the long term evolution (LTE) standard.

According to a first preferred implementation form of the second aspect, the narrow band internet of things (NB-IoT) communication is set to in-band mode or to guard-band mode.

According to a further preferred implementation of the second aspect, the test signals are further based on orthogonal frequency-division multiple access channel noise generation.

According to a further preferred implementation of the second aspect, the common reference signals have a first periodicity and the orthogonal frequency-division multiple access channel noise generation has a second periodicity.

According to a further preferred implementation of the second aspect, the first periodicity is equal to the second periodicity or the first periodicity is different from the second periodicity.

According to a further preferred implementation of the second aspect, the first periodicity and/or the second periodicity is equal to the periodicity of a frame of the long term evolution (LTE) standard.

According to a further preferred implementation of the second aspect, the first periodicity and/or the second periodicity is equal to 5 to 15 milliseconds, preferably 10 milliseconds.

According to a third preferred aspect of the invention, a computer program with program code means for performing all steps according to the second aspect, if the program is executed on a computer or digital signal processor, is provided.

Exemplary embodiments of the invention are now further explained with respect to the drawings by way of example only, and not for limitation. In the drawings:
- Fig. 1: shows an exemplary standalone operation of NB-IoT in a global system for mobile communication (GSM) low band;
- Fig. 2: shows an exemplary guard-band mode operation of NB-IoT next to LTE carriers;
- Fig. 3: shows an exemplary in-band mode operation of NB-IoT within a LTE carrier;
- Fig. 4: shows an exemplary embodiment of the inventive communication testing device;
- Fig. 5: shows a further exemplary embodiment of the inventive communication testing device; and
- Fig. 6: shows a flow chart of an exemplary embodiment of the second aspect of the invention.

In advance, before exemplary embodiments of the invention are explained with respect to the drawings by way of example, some background information regarding IoT, and especially regarding NB-IoT, should be given in the following.

Generally, the internet of things relates to machine-to-machine (M2M) communication which is increasingly gaining importance because in the near future, all devices that benefit from an internet connection will be connected in order to offer significant advantages in terms of improved efficiency, sustainability and safety for industry and society.

In particular, based on existing wireless networks, the narrow band internet of things technology being standardized by the 3GPP standards body (3GPP TSG RAN Meeting #69, RP-151621) provides not only a better network coverage for M2M communications because of its improved penetration of buildings but also supports a large number of connections and lowers power consumption and costs.

As a consequence of this, it is to be noted that NB-IoT meets the application requirements in industrial, public, personal, and home domains. For instance, these applications include smart metering such as wireless gas, water, or heat meters, municipal light and waste management, livestock breeding and irrigation, and environment monitoring.

Furthermore, NB-IoT is a self-contained carrier that can be deployed with a system bandwidth of only 180 kHz, or typically 200 kHz, and is further enabled using new network software on an existing LTE network.

Therefore, NB-IoT is designed to be tightly integrated and interwork with LTE, which offers great benefits regarding deployment flexibility in turn leading to three alternative basic scenarios: the NB-IoT carrier may be embedded within a normal LTE carrier (in-band mode), deployed in the LTE guard band (guard-band mode), or as a standalone carrier, for example, in GSM bands.

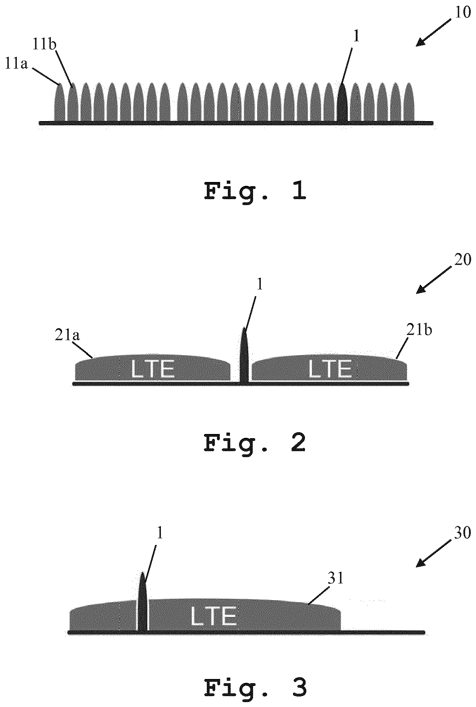

Neither the inventive device nor the inventive method explicitly relate to the above-mentioned standalone deployment in a GSM low band, which is especially an option when LTE is deployed in a higher band and GSM is still in use in order to provide coverage for basic services. This alternative is however illustrated by Fig. 1 for the sake of completeness.

With respect to Fig. 1, one can see a frequency band illustration 10, wherein both a large number GSM carriers - carriers 11a and 11b are two representatives thereof - being typically spaced at 200 kHz and the NB-IoT carrier 1 as a standalone carrier with the NB-IoT system bandwidth of 180 kHz, or typically 200 kHz, are shown.

Furthermore, Fig. 2 shows a frequency band illustration 20 according to the above-mentioned guard-band mode operation, wherein the NB-IoT carrier 1 with the NB-IoT system bandwidth of 180 kHz, or typically 200 kHz, is placed next to an LTE carrier 21a, 21b. In this case, NB-IoT is therefore designed to enable deployment in the guard band immediately adjacent to a LTE carrier, without affecting the capacity of the LTE carrier. Advantageously, the guard-band mode is particularly suitable for spectrum allocations which do not match the set of LTE system bandwidths, leaving gaps of unused spectrum next to the LTE carrier.

Now, with respect to Fig. 3, a frequency band illustration 30 according to the above-mentioned in-band mode operation is shown, wherein the NB-IoT carrier 1 with the NB-IoT system bandwidth of 180 kHz, or typically 200 kHz, is embedded within a LTE carrier 31. Furthermore, this efficient in-band deployment allows for a flexible assignment of resources between LTE and NB-IoT. Advantageously, in accordance with the in-band mode, for an NB-IoT carrier, it will be possible to time-share a resource with an existing LTE carrier.

In addition to this, the in-band deployment further advantageously allows for highly flexible migration scenarios. For instance, in the case of a NB-IoT service being firstly deployed as a standalone deployment in a GSM band, this NB-IoT service may subsequently be migrated to an in-band deployment if the GSM spectrum is re-allocated to LTE, whereby any fragmentation of the LTE carrier is advantageously avoided.

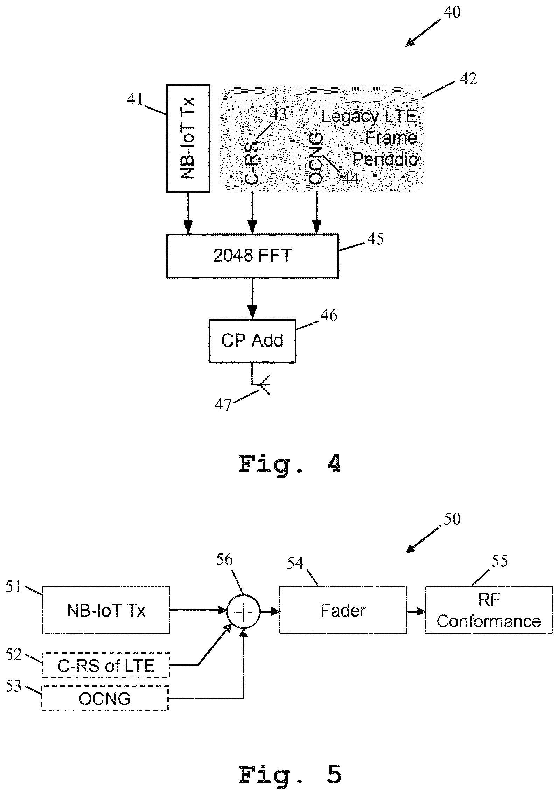

Now, with respect to Fig. 4, an exemplary embodiment of the inventive communication testing device 40 is shown. In this exemplary case, the following data are fed together into fast Fourier transform (FFT) means 45, exemplarily using a 2048-point FFT:
- the signal of a NB-IoT transmitter 41, for example in form of at least one physical resource block,
- common reference signals (C-RS) 43 according to the LTE standard 42, and
- orthogonal frequency-division multiple access channel noise generation (OCNG) 44 in accordance with the LTE standard 42,
whereby the C-RS 43 and the OCNG 44 have the periodicity of a frame of the LTE standard 42, exemplarily 10 milliseconds.

After passing the FFT means 45, a cyclic prefix (CP) is added with the aid of CP add means 46. Subsequently, the test signal based on C-RS 43 and OCNG 44 and further comprising a CP is transmitted at an exemplary sampling frequency of 30.72 MHz by means of an antenna 47, for example to an user equipment (UE).

Generally, with respect to an NB-IoT communication set to in-band mode or guard-band mode, a NB-IoT UE only makes use of the C-RS of a network cell working under the LTE standard, whereas the remaining communication parts of the LTE network cell are to be seen as interferers concerning the NB-IoT communication.

Therefore, especially with respect to the purpose of testing a NB-IoT communication, it is highly advantageous to replace the LTE network cell by a dummy network cell which exclusively provides the actually required signals in form of the C-RS. Additionally, in order to make a NB-IoT UE believe that it communicates with a real LTE network cell, the dummy cell may also provide OCNG.

Furthermore, whereas the C-RS may have a periodicity of a frame of the LTE standard, which typically is 10 milliseconds, the OCNG may have similar periodicity.

Moreover, with respect to the frequency domain, the dummy network cell may be represented by modulation symbols entering into the respective inverse fast Fourier transform (IFFT), or in the time domain, the dummy network cell is expressed as baseband I/Q values.

Further advantageously, a dummy network cell and the respective NB-IoT network cell may jointly be created in order to allow for directly passing the respective test signal to a fader, which will be necessary for radio frequency (RF) conformance testing.

The above-mentioned advantage is illustrated by Fig. 5 which shows a further exemplary embodiment of the inventive communication testing device 50.

With respect to Fig. 5, a dummy network cell in form of C-RS 52 and OCNG 53 and the respective NB-IoT network cell in form of a NB-IoT transmitter 51 is jointly created, which is expressed by the summation node 56. The results of the summation, test signals based on C-RS 52 and OCNG 53 according to the LTE standard, are directly passed to a fader 54 in order to perform tests regarding RF conformance with the aid of the RF conformance testing means 55.

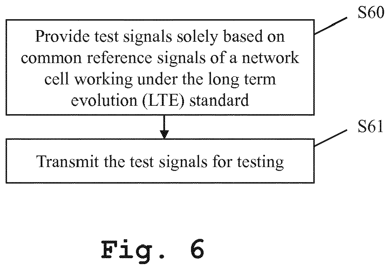

Finally, Fig. 6 shows a flow chart of the inventive method. In a first step S60, test signals solely based on common reference signals of a network cell working under the long term evolution (LTE) standard are provided. In a second step S61, the test signals are transmitted for testing.

While various embodiments of the present invention have been described above, it should be understood that they have been presented by way of example only, and not limitation. Numerous changes to the disclosed embodiments can be made in accordance with the disclosure herein without departing from the spirit or scope of the invention.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A communication testing device (40,50) for testing a narrow band internet of things (NB-IoT) communication, wherein the communication testing device (40,50) is configured to transmit test signals for testing, and wherein the test signals are solely based on common reference signals (43,52) of a network cell working under the long term evolution (LTE) standard (42).

2. The communication testing device according to claim 1, wherein the communication testing device (40,50) is configured to set the narrow band internet of things (NB-IoT) communication to in-band mode or to guard-band mode.

3. The communication testing device according to claim 1 or 2,
wherein the communication testing device (40,50) is configured to further base the test signals on orthogonal frequency-division multiple access channel noise generation (44,53).

4. The communication testing device according to any of the claims 1 to 3,
wherein the common reference signals (43,52) have a first periodicity and the orthogonal frequency-division multiple access channel noise generation (44,53) has a second periodicity.

5. The communication testing device according to claim 4, wherein the first periodicity is equal to the second periodicity or the first periodicity is different from the second periodicity.

6. The communication testing device according to claims4 or 5,
wherein the first periodicity and/or the second periodicity is equal to the periodicity of a frame of the long term evolution (LTE) standard.

7. The communication testing device according to any of the claims 1 to 6,
wherein the first periodicity and/or the second periodicity is equal to 5 to 15 milliseconds, preferably 10 milliseconds.

8. A communication testing method for testing a narrow band internet of things (NB-IoT) communication,
wherein test signals are transmitted for testing (S61), and wherein the test signals are solely based on common reference signals of a network cell working under the long term evolution (LTE) standard (S60).

9. The communication testing method according to claim 8, wherein the narrow band internet of things (NB-IoT) communication is set to in-band mode or to guard-band mode.

10. The communication testing method according to claim 8 or 9,
wherein the test signals are further based on orthogonal frequency-division multiple access channel noise generation (44,53).

11. The communication testing method according to any of the claims 8 to 10,
wherein the common reference signals (43,52) have a first periodicity and the orthogonal frequency-division multiple access channel noise generation (44, 53) has a second periodicity.

12. The communication testing method according to claim 11, wherein the first periodicity is equal to the second periodicity or the first periodicity is different from the second periodicity.

13. The communication testing method according to claim 11 or 12,
wherein the first periodicity and/or the second periodicity is equal to the periodicity of a frame of the long term evolution (LTE) standard (42).

14. The communication testing method according to any of the claims 8 to 13,
wherein the first periodicity and/or the second periodicity is equal to 5 to 15 milliseconds, preferably 10 milliseconds.

15. A computer program with program code means for performing all steps according to any of the claims 8 to 14, if the program is executed on a computer or a digital signal processor.

## Patentansprüche

1. Kommunikationstestvorrichtung (40, 50) zum Testen der Kommunikation eines schmalbandigen Internets der Dinge (NB-IoT), wobei die Kommunikationstestvorrichtung (40, 50) zum Übertragen von Testsignalen zum Testen ausgeführt ist, und wobei die Testsignale ausschließlich auf gemeinsamen Bezugssignalen (43, 52) einer Mobilfunkzelle basieren, die mit dem Long Term Evolution (LTE) Standard (42) arbeitet.

2. Kommunikationstestvorrichtung nach Anspruch 1, wobei die Kommunikationstestvorrichtung (40, 50) zum Einstellen des schmalbandigen Internets der Dinge (NB-IoT) auf den In-Band-Modus oder auf den Schutzbereich-Modus ausgeführt ist.

3. Kommunikationstestvorrichtung nach Anspruch 1 oder 2,
wobei die Kommunikationstestvorrichtung (40, 50) so ausgeführt ist, dass sie die Testsignale weiterhin auf orthogonale Frequenzmehrfachzugangskanal-Rauscherzeugung (44, 53) basiert.

4. Kommunikationstestvorrichtung nach einem der Ansprüche 1 bis 3,
wobei die gemeinsamen Bezugssignale (43, 52) eine erste Periodizität aufweisen und die orthogonale Frequenzmehrfachzugangskanal-Rauscherzeugung (44, 52) eine zweite Periodizität aufweist.

5. Kommunikationstestvorrichtung nach Anspruch 4,
wobei die erste Periodizität gleich der zweiten Periodizität ist oder die erste Periodizität von der zweiten Periodizität verschieden ist.

6. Kommunikationstestvorrichtung nach Anspruch 4 oder 5,
wobei die erste Periodizität und/oder die zweite Periodizität gleich der Periodizität eines Frames des Long Term Evolution (LTE) Standards ist.

7. Kommunikationstestvorrichtung nach einem der Ansprüche 1 bis 6,
wobei die erste Periodizität und/oder die zweite Periodizität gleich 5 bis 15 Millisekunden, vorzugsweise 10 Millisekunden, beträgt.

8. Kommunikationstestverfahren zum Testen einer Kommunikation des schmalbandigen Internets der Dinge (NB-IoT),
wobei Testsignale zum Testen übertragen werden (S61), und wobei die Testsignale ausschließlich auf gemeinsamen Bezugssignalen einer Mobilfunkzelle basieren, die mit dem Long Term Evolution (LTE) Standard arbeitet (S60).

9. Kommunikationstestverfahren nach Anspruch 8,
wobei die Kommunikation des schmalbandigen Internets der Dinge (NB-IoT) auf In-Band-Modus oder auf Schutz-Band-Modus eingestellt ist.

10. Kommunikationstestverfahren nach Anspruch 8 oder 9,
wobei die Testsignale weiterhin auf orthogonaler Frequenzmehrfachzugangskanal-Rauscherzeugung (44, 53) basieren.

11. Kommunikationstestverfahren nach einem der Ansprüche 8 bis 10,
wobei die gemeinsamen Bezugssignale (43, 52) eine erste Periodizität aufweisen und die orthogonale Frequenzmehrfachzugangskanal-Rauscherzeugung (44, 53) eine zweite Periodizität aufweist.

12. Kommunikationstestverfahren nach Anspruch 11, wobei die erste Periodizität gleich der zweiten Periodizität ist oder die erste Periodizität von der zweiten Periodizität verschieden ist.

13. Kommunikationstestverfahren nach Anspruch 11 oder 12,
wobei die erste Periodizität und/oder die zweite Periodizität gleich der Periodizität eines Frames des Long Term Evolution (LTE) Standards (42) ist.

14. Kommunikationstestverfahren nach einem der Ansprüche 8 bis 13,
wobei die erste Periodizität und/oder die zweite Periodizität gleich 5 bis 15 Millisekunden, vorzugsweise 10 Millisekunden, beträgt.

15. Computerprogramm mit Programmcode-Mitteln zur Durchführung aller Schritte nach einem der Ansprüche 8 bis 14, wenn das Programm auf einem Computer oder einem digitalen Signalprozessor ausgeführt wird.

## Revendications

1. Dispositif de test de communication (40, 50) pour tester une communication NB-IoT, Narrow Band Internet of Things,
dans lequel le dispositif de test de communication (40, 50) est configuré pour transmettre des signaux de test pour un test, et
dans lequel les signaux de test sont basés uniquement sur des signaux de référence communs (43, 52) d'une cellule de réseau fonctionnant sous la norme (LTE), Long Term Evolution, (42).

2. Dispositif de test de communication selon la revendication 1,
dans lequel le dispositif de test de communication (40, 50) est configuré pour établir la communication (NB-IoT), Narrow Band Internet of Things, dans un mode dans la bande ou dans un mode dans la bande de garde.

3. Dispositif de test de communication selon la revendication 1 ou 2,
dans lequel le dispositif de test de communication (40, 50) est configuré pour baser en outre les signaux de test sur une génération de bruit de canal d'accès multiple par répartition en fréquence orthogonale (44, 53).

4. Dispositif de test de communication selon l'une quelconque des revendications 1 à 3,
dans lequel les signaux de référence communs (43, 52) ont une première périodicité et la génération de bruit de canal d'accès multiple par répartition en fréquence orthogonale (44, 53) a une deuxième périodicité.

5. Dispositif de test de communication selon la revendication 4, dans lequel la première périodicité est égale à la deuxième périodicité ou la première périodicité est différente de la deuxième périodicité.

6. Dispositif de test de communication selon la revendication 4 ou 5,
dans lequel la première périodicité et/ou la deuxième périodicité sont égales à la périodicité d'une trame de la norme (LTE), Long Term Evolution.

7. Dispositif de test de communication selon l'une quelconque des revendications 1 à 6,
dans lequel la première périodicité et/ou la deuxième périodicité sont égales à 5 à 15 millisecondes, de préférence à 10 millisecondes.

8. Procédé de test de communication pour tester une communication (NB-IoT), Narrow Band Internet of Things,
dans lequel les signaux de test sont transmis pour un test (S61), et
dans lequel les signaux de test sont basés uniquement sur des signaux de référence communs d'une cellule de réseau fonctionnant sous la norme (LTE), Long Term Evolution, (S60).

9. Procédé de test de communication selon la revendication 8,
dans lequel la communication (NB-IoT), Narrow Band Internet of Things, est établie dans un mode dans la bande ou dans un mode dans la bande de garde.

10. Procédé de test de communication selon la revendication 8 ou 9,
dans lequel les signaux de test sont basés en outre sur une génération de bruit de canal d'accès multiple par répartition en fréquence orthogonale (44, 53).

11. Procédé de test de communication selon l'une quelconque des revendications 8 à 10,
dans lequel les signaux de référence communs (43, 52) ont une première périodicité et la génération de bruit de canal d'accès multiple par répartition en fréquence orthogonale (44, 53) a une deuxième périodicité.

12. Procédé de test de communication selon la revendication 11,
dans lequel la première périodicité est égale à la deuxième périodicité ou la première périodicité est différente de la deuxième périodicité.

13. Procédé de test de communication selon la revendication 11 ou 12,
dans lequel la première périodicité et/ou la deuxième périodicité sont égales à la périodicité d'une trame de la norme (LTE), Long Term Evolution, (42).

14. Procédé de test de communication selon l'une quelconque des revendications 8 à 13,
dans lequel la première périodicité et/ou la deuxième périodicité sont égales à 5 à 15 millisecondes, de préférence à 10 millisecondes.

15. Programme d'ordinateur avec des moyens formant code de programme pour effectuer toutes les étapes selon l'une quelconque des revendications 8 à 14, si le programme est exécuté sur un ordinateur ou un processeur de signaux numériques.
